Europäisches Patentamt

European Patent Office

Office européen des brevets

(19)

(11) **EP 0 731 358 B1**

(12) **EUROPÄISCHE PATENTSCHRIFT**

(45) Veröffentlichungstag und Bekanntmachung des Hinweises auf die Patenterteilung:
**18.07.2001 Patentblatt 2001/29**

(51) Int Cl.[7]: **G01P 21/02**

(21) Anmeldenummer: **96103112.7**

(22) Anmeldetag: **01.03.1996**

(54) **Verfahren und Einrichtung zum Prüfen eines Geschwindigkeitsbegrenzers einer Aufzugsanlage**

Method and apparatus for testing a speed limiter of an elevator

Procédé et appareil pour tester un limiteur de vitesse d'un ascenseur

(84) Benannte Vertragsstaaten:
**AT BE CH DE ES FR GB IT LI NL**

(30) Priorität: **10.03.1995 CH 69595**

(43) Veröffentlichungstag der Anmeldung:
**11.09.1996 Patentblatt 1996/37**

(73) Patentinhaber: **INVENTIO AG**
**CH-6052 Hergiswil (CH)**

(72) Erfinder:
• **Liebetrau, Christoph, Masch.-Ing. HTL**
**5737 Menziken (CH)**
• **Mattli, Hanspeter, Ing. HTL**
**6462 Seedorf (CH)**

(56) Entgegenhaltungen:
**DE-B- 1 018 660      JP-A- 5 294 579**
**US-A- 4 266 422**

**Beschreibung**

Die Erfindung betrifft ein Verfahren und eine Einrichtung zum Prüfen eines Geschwindigkeitsbegrenzers einer Aufzugsanlage, der bei einer bestimmten Übergeschwindigkeit einer in einem Aufzugsschacht verfahrbaren Aufzugskabine eine an der Aufzugskabine angeordnete Fangvorrichtung betätigt und die Aufzugskabine stillsetzt.

Aufzüge müssen mit einer Fangvorrichtung ausgerüstet sein, welche durch einen Geschwindigkeitsbegrenzer beim Überschreiten der normalen Fahrgeschwindigkeit um einen vorbestimmten Wert ausgelöst wird. Kommt die Fangvorrichtung zur Auslösung, so wird die Kabine mit einer grossen negativen Beschleunigung stillgesetzt, was zu hoher Materialbeanspruchung führt und zudem erheblichen Aufwand zur Wiederherstellung der Betriebsbereitschaft des Aufzuges erfordert. Zum Prüfen des Geschwindigkeitsbegrenzers ist es deshalb vorteilhaft, die Ansprechschwelle der Auslöseorgane des Geschwindigkeitsbegrenzers durch Simulation einer Übergeschwindigkeit zu ermitteln. Aus dem Stand der Technik sind Geschwindigkeitsbegrenzer mit einer zweiten Seilrille bekannt, die kleiner ist als die für den Normalbetrieb vorgesehene Seilrille. Beim Prüfen des Geschwindigkeitsbegrenzers wird das die Fangvorrichtung auslösende Begrenzerseil auf die zweite Seilrille gelegt und die Aufzugskabine mit Normalgeschwindigkeit verfahren. Dadurch wird für die Auslöseorgane des Geschwindigkeitsbegrenzers eine Übergeschwindigkeit simuliert, bei der die Fangvorrichtung ausgelöst werden muss. Üblicherweise werden die Fangkeile der Fangvorrichtung bei Prüffahrten ausgeschaltet, sodass Prüffahrten ohne weiteren Aufwand mehrmals wiederholt werden können.

Ein Nachteil der bekannten Methode und Einrichtung liegt darin, dass lediglich eine Aussage gemacht werden kann, ob der Geschwindigkeitsbegrenzer auslöst oder nicht. Ausserdem ist es aus Sicherheitsgründen problematisch, die Übergeschwindigkeit mit der fahrenden Aufzugskabine zu simulieren.

Mit der JP 05294579 ist eine Einrichtung zum Prüfen eines Geschwindigkeitsbegrenzers einer Aufzugsanlage bekannt geworden. Mittels einer Antriebseinrichtung wird die Seilumlenkrolle des Geschwindigkeitsbegrenzers mit zunehmender Geschwindigkeit bis zum Auslösepunkt des Geschwindigkeitsbegrenzers angetrieben und die gemessene Auslösegeschwindigkeit mit der nominellen Auslösegeschwindigkeit verglichen.

Diese Prüfeinrichtung hat zum Nachteil, dass gleichzeitig die Antriebseinrichtung manuell hochgefahren, die Auslösung des Geschwindigkeitsbegrenzers hörbar überwacht und die Auslösegeschwindigkeit abgelesen werden muss. Der Operateur muss drei Funktionen gleichzeitig ausführen, was unweigerlich zu ungenauen und nicht reproduzierbaren Ergebnissen führt.

Hier will die Erfindung Abhilfe schaffen. Die Erfindung, wie sie in den Ansprüchen gekennzeichnet ist, löst die Aufgabe, die Nachteile der bekannten Methode und Einrichtung zu vermeiden und ein Verfahren und eine Einrichtung zu schaffen mit dem und mit der der genaue Auslösepunkt des Geschwindigkeitsbegrenzers bestimmbar ist.

Die durch die Erfindung erreichten Vorteile sind im wesentlichen darin zu sehen, dass vor Ort mit einfachen Mitteln und mit kleinstem Aufwand die Prüfung des Geschwindigkeitsbegrenzers ohne weiteres wiederholbar ist. Mit einer Testserie und mit der Bestimmung des genauen Auslösepunktes lassen sich bessere Aussagen über die Zuverlässigkeit des geprüften Geschwindigkeitsbegrenzers machen. Gegenüber den herkömmlichen Methoden und Einrichtungen sind mit der erfindungsgemässen Testeinrichtung mit weniger Zeitaufwand genauere Messresultate erzielbar.

Im folgenden wird die Erfindung anhand von lediglich einen Ausführungsweg darstellenden Zeichnungen näher erläutert. Es zeigen:

Fig. 1     eine erfindungsgemässe Einrichtung zum Prüfen eines Geschwindigkeitsbegrenzers,

Fig. 2a     eine Seitenansicht eines Antriebsrades der Einrichtung gemäss Fig. 1,

Fig. 2b     einen Schnitt entlang der Linie A-A der Fig. 2a des Antriebsrades,

Fig. 2c     einen Ausschnitt B der Fig. 2b,

Fig. 3     einen Geschwindigkeitsverlauf mit Messstellen bei einer Geschwindigkeitsmessung und

Fig. 4     eine Anzahl Lichtreflexionen mit Messstellen bei einer Drehzahlmessung.

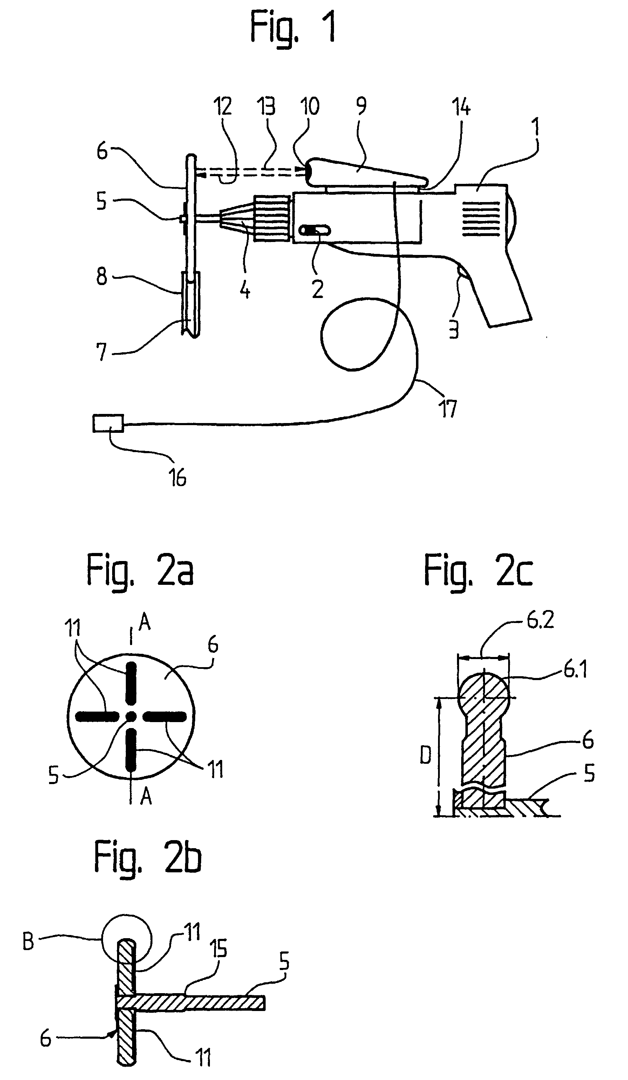

In den Fig. 1, 2a, 2b und 2c ist mit 1 eine handelsübliche Bohrmaschine mit elektronischer Drehzahlregulierung bezeichnet. Die mit einem Umschalter 2 zur Drehrichtungsumschaltung versehene Bohrmaschine 1 kann mittels eines Schalters 3 in Gang gesetzt werden. Die nicht dargestellte elektronische Drehzahlregulierung weist einen Hochlaufgeber auf, der nach dem Betätigen des Schalters 3 die Drehzahl der Bohrmaschine 1 selbsttätig linear hochfährt. In einem Bohrfutter 4 der Bohrmaschine 1 ist eine Radachse 5 eines Antriebsrades 6 eingespannt, das in eine Seilrille 7 einer Seilumlenkrolle 8 eingreift und diese antreibt. Die Seilumlenkrolle 8 ist Bestandteil eines zu prüfenden nicht dargestellten Geschwindigkeitsbegrenzers. Bei Normalbetrieb der Aufzugsanlage dient die Seilumlenkrolle 8 der Umlenkung eines nicht dargestellten in der Seilrille 7 verlaufenden Begrenzerseiles, das von einer in einem Aufzugsschacht verfahrbaren Aufzugskabine angetrieben wird. Bei Übergeschwindigkeit der Aufzugskabine blockiert der Geschwindigkeitsbegrenzer die Seilumlenkrolle 8, wodurch das Begrenzerseil die Fangvorrichtung der Aufzugskabine auslöst.

Zur Prüfung des Geschwindigkeitsbegrenzers wird das Begrenzerseil von der Seilumlenkrolle 8 abgenommen. Dann wird die Seilumlenkrolle 8 mittels des Antriebsrades 6 mit einer linear ansteigenden Geschwindigkeit bis zum Auslösepunkt des Geschwindigkeitsbegrenzers angetrieben. Die Bewegung des Antriebsrades 6 wird mittels eines mit Rechnermitteln versehenen Auswertegerätes 9 mit einer Optoelektronik 10 erfasst und ausgewertet. Am Antriebsrad 6 angeordnete Reflektoren 11 reflektieren von der Optoelektronik 10 ausgesendetes Licht 12, das in der Form von Lichtreflexion 13 von der Optoelektronik 10 detektiert und ausgewertet wird. Das Auswertegerät 9 mit der Optoelektronik 10 ist mittels einer Befestigung 14 präzise und lösbar mit der Bohrmaschine 1 verbunden. Die Radachse 5 weist einen Anschlag 15 auf, der am Bohrfutter 4 ansteht. Die Geschwindigkeit der Seilumlenkrolle 8 wird mit der Bohrmaschine 1 via Antriebsrad 6 langsam linear bis zum Auslösepunkt des Geschwindigkeitsbegrenzers erhöht. Der Auslösezeitpunkt wird von einem lösbar mit dem Geschwindigkeitsbegrenzer verbundenen Beschleunigungssensor 16 detektiert und dessen Signal über ein Verbindungskabel 17 dem Auswertegerät zugeführt. Dieses zeigt anschliessend auf einer Anzeige die Geschwindigkeit an, bei welcher der Geschwindigkeitsbegrenzer angesprochen hat. Dank der mit einem Umschalter 2 zur Drehrichtungsumschaltung versehenen Bohrmaschine 1 ist die Einrichtung zum Prüfen des Geschwindigkeitsbegrenzers drehrichtungsunabhängig.

Versuche haben gezeigt, dass ein optimaler Abrolldurchmesser D des Antriebsrades 6 bei 110 mm liegt. Der optimale Abrolldurchmesser D wirkt sich vorteilhaft aus auf Messfehler, auf die Kraftübertragung und ermöglicht ein langsames Hochfahren. Das Antriebsrad 6 ist beispielsweise aus einer Aluminiumlegierung gefertigt und schwarz harteloxiert. Der Kontakt zur Seilumlenkrolle 8 ist direkt Metall auf Metall. Der aktive Abrolldurchmesser D des Antriebsrades 6 ist somit genau vorgegeben. Ausserdem ist die Abnutzung des Antriebsrades 6 gering. Eine mit 6.1 bezeichnete Lauffläche ist kreisrund ausgebildet und weist einen Durchmesser 6.2 auf, der dem Durchmesser des Begrenzerseiles entspricht. Zum berührungslosen Messen der Geschwindigkeit bzw. der Drehzahl sind radachsenseitig streifenförmige Reflektoren 11 symmetrisch angeordnet. Weil ungenau positionierte Reflektoren 11 Fehler bei den Geschwindigkeitsmessungen bewirken, werden die Reflektoren 11 gestanzt und in gefräste Nuten eingelegt. Die schwarze Eloxierung des Antriebsrades 6 absorbiert das Licht 12. Nur die Reflektoren 11 erzeugen eine Lichtreflexion 13, die von der Optoelektronik 10 aufgenommen und ausgewertet wird.

Im Auslösepunkt blockiert der Geschwindigkeitsbegrenzer schlagartig die Seilumlenkrolle 8. Diese Reaktion führt zu einer starken Erschütterung des Geschwindigkeitsbegrenzers und liegt im allgemeinen wesentlich über einer negativen Beschleunigung von 10 g, die mit dem Beschleunigungssensor 16 erfasst wird. Der Beschleunigungssensor 16 kann einfach mittels eines Permanentmagneten am Geschwindigkeitsbegrenzer lösbar festgemacht werden, wobei die Ansprechrichtung des Beschleunigungssensors 16 zu beachten ist.

Das Auswertegerät 9 ist mikroprozessorgesteuert und mittels einer Tastatur bedienbar. Vorne im Auswertegerät 9 ist die Optoelektronik 10 integriert, welche die an dem Antriebsrad 6 angeordneten Reflektoren 11 detektiert. Normalerweise zeigt das Auswertegerät 6 die Geschwindigkeit in Meter pro Sekunde m/s nach dem Auslösen des Geschwindigkeitsbegrenzers an. Zusätzlich besteht die Möglichkeit einer Drehzahlmessung in Umdrehungen pro Minute rpm.

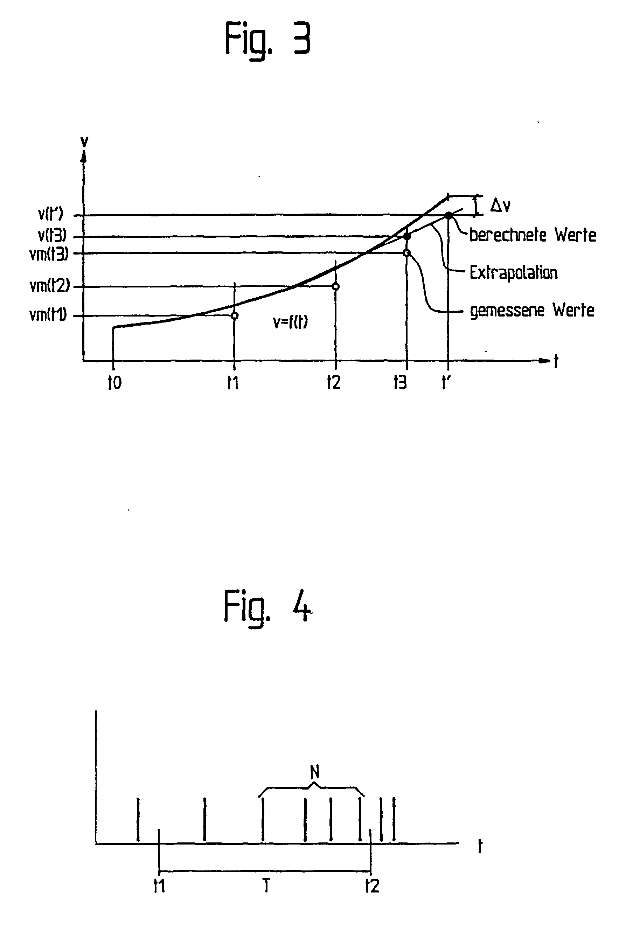

Bei der Geschwindigkeitsmessung wird die Geschwindigkeit in Meter pro Sekunde m/s im Auslösepunkt des Geschwindigkeitsbegrenzers ermittelt. Wie in Fig. 3 dargestellt, wird zur Zeit t3 aus einer Zeitdifferenz t3-t2 zwischen zwei aufeinanderfolgenden Lichtreflexionen 13, aus dem Abrolldurchmesser D des Antriebsrades 6 sowie aus der Anzahl n Reflektoren 11 die mittlere Umfangsgeschwindigkeit vm(t3) für das vergangene Zeitintervall [t2,t3] nach folgender Formel berechnet:

$$vm(t3) = \frac{D * Pi}{n * (t3-t2)} \qquad [1]$$

Da Abweichungen zu Messfehlern führen , müssen für genaue Geschwindigkeitsmessungen gemäss Formel [1] die Zeitdifferenz t3-t2 präzise gemessen werden, das Antriebsrad 6 exakt den Abrolldurchmesser D haben sowie die Anzahl n Reflektoren 11 in gleichen Abständen plaziert sein. Pi ist die Kreiskonstante 3,1414.....

Üblicherweise ist der in Fig. 3 gezeigte Geschwindigkeitsverlauf v = f(t) eine Gerade, bei der die Geschwindigkeitszunahme bei einer konstanten Beschleunigung a linear erfolgt. Die Momentangeschwindigkeit in der Mitte des Zeitintervalls [t2,t3] hat dabei exakt den Wert vm(t3)

$$v(\frac{t2 + t3}{2}) = vm(t3) \qquad [2]$$

Mit vm(t3) und dem entsprechenden Geschwindigkeitswert des vorangehenden Zeitintervalls [t1,t2] kann die angenommene konstante Beschleunigung a im Zeitpunkt t2 berechnet werden.

$$a(t2) = \frac{vm(t3) - vm(t2)}{\frac{(t2-t1) + (t3-t2)}{2}} \qquad [3]$$

Durch Extrapolation ergibt sich mit a(t2) die Momentangeschwindigkeit v(t3):

$$v(t3) = vm(t3) + a(t2) * \frac{(t3-t2)}{2} \qquad [4]$$

Aus diesen Erkenntnissen kann die Geschwindigkeit v(t') am Umfang der Seilumlenkrolle 8 im Auslösezeitpunkt t' durch Extrapolation berechnet werden. Mit der Annahme, dass der vom Beschleunigungssensor 16 erfasste Auslösezeitpunkt t' im Zeitintervall [t3,t4] liegt ergibt sich folgende Formel:

$$v(t') = v(t3) + a(t2) * (t'-t3) \qquad [5]$$

Ist die Beschleunigung a nicht konstant, dann stimmt v(t') nur näherungsweise. Für die Fehlerabschätzung wird berechnet, wie stark sich die Beschleunigung a ändert. Unter der Annahme, die Beschleunigung a ändere sich höchstens linear, kann eine entsprechende Konstante e nach folgender Formel bestimmt werden:

$$e = \frac{a(t2) - a(t1)}{\frac{(1-t0)}{4} + \frac{(t2-t1)}{2} + \frac{(t3-t2)}{4}} \qquad [6]$$

Mit dieser konstanten Beschleunigungsänderung e muss v(t') um *deltav* korrigiert werden:

$$deltav = \frac{1}{2} * e \left\{ \frac{(t3-t2)}{2} + (t'-t3) \right\}^2 \qquad [7]$$

Das Messergebnis wird als ungültig signalisiert, falls *deltav* mehr als ±q% von v(t') abweicht. q ist am Auswertegerät 9 in % einstellbar. Ungenauigkeiten bei der Plazierung der Reflektoren 11, Unterschiede der Reflexionseigenschaften der Reflektoren 11 sowie Vibrationen des Auswertegerätes führen ebenfalls zu Messfehlern die *deltav* beeinflussen. Als Grundeinstellung hat sich in der Praxis der Wert von q = 5% bewährt.
Wie in Fig. 4 dargestellt werden zur Bestimmung der Drehzahl rpm in Umdrehungen pro Minute die Anzahl N der Lichtreflexionen 13 während einer konstanten Messzeit T = t2-t1 gezählt. Daraus berechnet sich die mittlere Drehzahl während dem Zeitintervall [t1,t2] nach folgender Formel:

$$rpm(t2) = \frac{N}{n * T} * 60 \qquad [8]$$

Das Antriebsrad 6 kann bei N gezählten Lichtreflexionen 13 am Radumfang den Weg (N±1)*D*Pi/n zurückgelegt haben. Diese Ungewissheit führt dazu , dass für eine Genauigkeit von ±p% eine Mindestanzahl N_min von Lichtreflexionen 13 gezählt werden muss:

$$N\_min > \frac{100}{P} \qquad [9]$$

Um auch bei kleinen Drehzahlen rpm_min eine minimale Messgenauigkeit p zu gewährleisten, muss entsprechend die Messzeit T genügend gross und/oder die Anzahl n der Reflektoren 11 genügend gross gewählt werden.

$$n * T > \frac{6000}{rpm\_min * p} \qquad [10]$$

Die Messgenauigkeit ist nur garantiert, falls bei n>1 die Reflektoren 11 in gleichen Abständen plaziert sind und diese immer an derselben Messstelle abgetastet werden. Die Messzeit T und die Anzahl n der Reflektoren 11 können bei der Drehzahlmessung am Auswertegerät 9 individuell eingestellt werden.

**Patentansprüche**

1. Verfahren zum Prüfen eines Geschwindigkeitsbegrenzers einer Aufzugsanlage, wobei eine bei Normalbetrieb von einem Begrenzerseil angetriebene Seilumlenkrolle (8) des Geschwindigkeitsbegrenzers mittels einer Antriebseinrichtung (1,2,3,4,5,6) bis zum Auslösepunkt des Geschwindigkeitsbegrenzers mit zunehmender Geschwindigkeit (v) angetrieben wird,
   dadurch gekennzeichnet,

   dass ein Auslösezeitpunkt (t') von einem am Geschwindigkeitsbegrenzer anbringbaren Sensor (16) detektiert wird und
   dass eine Auslösegeschwindigkeit v(t') des Geschwindigkeitsbegrenzers mittels eines Auswertegerätes (9) aufgrund des Auslösezeitpunktes (t') und der vom Auswertegerät (9) erfassten Geschwindigkeit (v) bestimmt wird.

2. Verfahren nach Anspruch 1,
   dadurch gekennzeichnet,
   dass die Seilumlenkrolle (8) von einem von einer Bohrmaschine (1) angetriebenen Antriebsrad (6) angetrieben wird, wobei zum Erfassen der Geschwindigkeit (v) vom Auswertegerät (9) ausgesendetes Licht (12) mittels Reflektoren (11) am Antriebsrad (6) als Lichtreflexion (13) dem Auswertegerät (9) zugeführt wird.

3. Verfahren nach Anspruch 2,
   dadurch gekennzeichnet,

   dass eine mittlere Geschwindigkeit vm(t3) nach der Formel

$$vm(t3) = \frac{D * Pi}{n * (t3-t2)}$$

berechnet wird, wobei D der Abrolldurchmesser des Antriebsrades (6), Pi die Kreiskonstante 3,1414..., n die Anzahl Reflektoren (11) und (t3-t2) die Zeitdifferenz zwischen zwei aufeinanderfolgenden Lichtreflexionen (13) sind,

dass eine konstante Beschleunigung a(t2) nach der Formel

$$a\,(t2) = \frac{vm(t3) - vm(t2)}{\frac{(t2-t1) + (t3-t2)}{2}}$$

berechnet wird, wobei (t2-t1) die vorangehende Zeitdifferenz und vm(t2) die mittlere Geschwindigkeit der vorangehenden Zeitdifferenz sind und

dass durch Extrapolation aus a(t2) eine Momentangeschwindigkeit v(t3) nach der Formel

$$v(t3) = vm(t3) + a(t2) * \frac{(t3-t2)}{2}$$

berechnet wird.

4. Verfahren nach Anspruch 3,
dadurch gekennzeichnet,
dass die Auslösegeschwindigkeit v(t') durch Extrapolation nach der Formel

$$v(t') = v(t3) + a(t2) * (t'-t3)$$

berechnet wird, wobei (t') der vom Sensor (16) erfasste Auslösezeitpunkt und (t3) der Zeitpunkt der letzten Lichtreflexion (13) vor dem Auslösezeitpunkt (t') sind.

5. Verfahren nach Anspruch 4,
dadurch gekennzeichnet,
dass die Auslösegeschwindigkeit v(t') um

$$deltav = \frac{1}{2} * e * \left\{ \frac{(t3-t2)}{2} + (t'-t3) \right\}^2$$

korrigiert wird, wobei

$$e = \frac{a(t2) - a(t1)}{\frac{(t1-t0)}{4} + \frac{(t2-t1)}{2} + \frac{(t3-t2)}{4}}$$

sowie (t1-t0) und (t2-t1) vorangehende Zeitdifferenzen sind.

6. Verfahren nach Anspruch 2,
dadurch gekennzeichnet,
dass eine Drehzahl (rpm) in Umdrehungen pro Minute nach der Formel

$$rpm(t2) = \frac{N}{n * T} * 60$$

berechnet wird, wobei N die Anzahl Lichtreflexionen (13) während einer konstanten Messzeit T = t2-t1 und n die Anzahl Reflektoren (11) auf dem Antriebsrad (6) sind.

7. Einrichtung zum Prüfen eines Geschwindigkeitsbegrenzers einer Aufzugsanlage anhand des Verfahrens nach Anspruch 1, wobei für den Antrieb einer bei Normalbetrieb von einem Begrenzerseil angetriebenen Seilumlenkrolle (8) des Geschwindigkeitsbegrenzers eine Antriebseinrichtung (1,2,3,4,5,6) vorgesehen ist, die die Seilumlenkrolle Geschwindigkeitsbegrenzers mit zunehmender Geschwindigkeit (v) antreibt,
dadurch gekennzeichnet,

dass ein einen Auslösezeitpunkt (t') detektierender am Geschwindigkeitsbegrenzer anbringbarer Sensor (16) vorgesehen ist und
dass ein eine Auslösegeschwindigkeit v(t') des Geschwindigkeitsbegrenzers aufgrund des Auslösezeitpunktes (t') und der Geschwindigkeit (v) bestimmendes Auswertegerät (9) vorgesehen ist.

8. Einrichtung nach Anspruch 7,
dadurch gekennzeichnet,
dass für den Antrieb der Seilumlenkrolle (8) ein von einer Bohrmaschine (1) angetriebenes Antriebsrad (6) mit Reflektoren (11) vorgesehen ist.

9. Einrichtung nach den Ansprüchen 7 und 8,
dadurch gekennzeichnet,
dass das Auswertegerät (9) Rechnermittel zur Bestimmung der Auslösegeschwindigkeit v(t') und zum Erfassen der Geschwindigkeit (v) eine Optoelektronik (10) aufweist, die Licht (12) aussendet und die mittels der Reflektoren (11) am Antriebsrad (6) erzeugten Lichtreflexionen (13) detektiert und auswertet.

10. Einrichtung nach Anspruch 8,
dadurch gekennzeichnet,
dass die Bohrmaschine (1) einen Hochlaufgeber aufweist, der die Drehzahl der Bohrmaschine (1) linear ansteigen lässt.

## Claims

1. Method for testing a speed limiter of a lift installation, wherein a cable guide roller (8), which in normal operation is driven by a limiter cable, of the speed limiter is driven at increasing speed (v) up to the trigger point of the speed limiter by means of a drive equipment (1, 2, 3, 4, 5, 6), characterised in that a triggering instant (t') is detected by a sensor (16) mountable at the speed limiter and that a triggering speed v(t') of the speed limiter is ascertained by way of an evaluating device (9) on the basis of the speed (v) detected by the evaluating device (9) and of the triggering instant (t').

2. Method according to claim 1, characterised thereby, that the cable guide roller (8) is driven by a drive wheel (6), which is driven by a drilling machine (1), wherein, for detection of the speed (v), light (12) emitted from the evaluating device (9) is guided to the evaluating device (9) as light reflection (13) by means of reflectors (11) at the drive wheel (6).

3. Method according to claim 2, characterised thereby, that a mean speed vm(t3) is computed according to the formula

$$vm(t3) = \frac{D * Pi}{n * (t3-t2)}$$

wherein D is the rolling diameter of the drive wheel (6), Pi is the circle constant 3.1416 ..., n is the number of reflectors (11) and (t3-t2) is the time difference between two successive light reflections (13), that a constant acceleration a(t2) is computed according to the formula

$$a(t2) = \frac{vm(t3) - vm(t2)}{\frac{(t2-t1) + (t3-t2)}{2}}$$

wherein (t2-t1) is the preceding time difference and vm(t2) is the mean speed of the n is the number of reflectors (11) and that, by extrapolation from a(t2), an instantaneous speed v(t3) is computed according to the formula

$$v(t3) = vm(t3) + a(t2) * \frac{(t3-t2)}{2}.$$

4. Method according to claim 3, characterised thereby, that the triggering speed v(t') is computed by extrapolation according to the formula

$$v(t') = v(t3) + a(t2) * (t'-t3)$$

wherein (t') is the trigger instant detected by the sensor (16) and (t3) is the instant of the last light reflection (13) before the triggering instant (t').

5. Method according to claim 4, characterised thereby, that the triggering speed v(t') is corrected by

$$deltav = \frac{1}{2} * e \left\{ \frac{(t3-t2)}{2} + (t'-t3) \right\}^2$$

wherein

$$e = \frac{a(t2) - a(t1)}{\frac{(t1-t0)}{4} + \frac{(t2-t1)}{2} + \frac{(t3-t2)}{4}}$$

as well as (t1-60) and (t2-t1) being preceding time differences.

6. Method according to claim 2, characterised thereby, that a rotational speed (rpm) in revolutions per minute is computed according to the formula

$$rpm(t2) = \frac{N}{n * T} * 60$$

wherein N is the number of light reflections (13) during a constant measurement time T = t2 - t1 and n is the number of reflectors (11) on the drive wheel (6).

7. Equipment for checking a speed limiter of a lift installation on the basis of the method according to claim 1, wherein a drive equipment (1, 2, 3, 4, 5, 6) which drives a cable guide roller (8) at increasing speed (v) up to the trigger point of the speed limiter, is provided for the drive of the cable guide roller (8), which in normal operation is driven by a limiter cable, of the speed limiter, characterised in that a sensor (16) is provided, which is mountable at the speed limiter and detects a triggering instant (t'), and that an evaluating device (9) is provided, which ascertains a triggering speed v(t') of the speed limiter on the basis of the triggering instant (t') and the speed (v).

8. Equipment according to claim 7, characterised thereby, that a drive wheel (6), which is driven by a drilling machine (1), with reflectors (11) is provided for the drive of the cable guide roller (8).

9. Equipment according to the claims 7 and 8, characterised thereby, that the evaluating device (9) comprises computing means for ascertaining the triggering speed v(t') and an opti-electronic system (10), which emits light (12) and detects and evaluates the light reflections (13) produced by means of the reflectors (11) of the drive wheel (6).

**10.** Equipment according to claim 8, characterised thereby, that the drilling machine (1) displays a starting speed controller which allows the rotational speed of the drilling machine (1) to rise linearly.

## Revendications

**1.** Procédé pour tester un limiteur de vitesse sur une installation d'ascenseur, selon lequel une poulie de renvoi de câble (8) du limiteur de vitesse qui est entraînée, lors d'un fonctionnement normal, par un câble limiteur est entraînée à l'aide d'un dispositif d'entraînement (1, 2, 3, 4, 5, 6) à une vitesse (v) de plus en plus grande, jusqu'au point de déclenchement du limiteur de vitesse,

caractérisé en ce qu'un moment de déclenchement (t') est détecté par un détecteur (16) apte à être monté sur le limiteur de vitesse, et

en ce qu'une vitesse de déclenchement v(t') du limiteur de vitesse est définie à l'aide d'un appareil d'analyse (9) à partir du moment de déclenchement (t') et de la vitesse (v) enregistrée par l'appareil d'analyse (9).

**2.** Procédé selon la revendication 1, caractérisé en ce que la poulie de renvoi de câble (8) est entraînée par une roue d'entraînement (6) elle-même entraînée par une perceuse (1), étant précisé que pour l'enregistrement de la vitesse (v), une lumière (12) émise par l'appareil d'analyse (9) est transmise à celui-ci, sous la forme d'une réflexion de lumière (13), à l'aide de réflecteurs (11) prévus sur la roue d'entraînement (6).

**3.** Procédé selon la revendication 2, caractérisé en ce qu'une vitesse moyenne vm(t3) est calculée suivant la formule

$$vm(t3) = \frac{D * Pi}{n * (t3\text{-}t2)}$$

D désignant le diamètre de roulement de la roue d'entraînement (6), Pi le rapport constant de la circonférence d'un cercle à son diamètre 3,1414..., n le nombre de réflecteurs (11) et (t3-t2) la différence de temps entre deux réflexions de lumière (13) successives,

en ce qu'une accélération constante a(t2) est calculée suivant la formule

$$a(t2) = \frac{vm(t3)\ \text{-}vm(t2)}{\frac{(t2\text{-}t1 + (t3\text{-}t2)}{2}}$$

(t2-t1) désignant la différence de temps précédente et vm(t2) la vitesse moyenne de la différence de temps précédente,

et en ce qu'une vitesse momentanée v(t3) est calculée par extrapolation à partir de a(t2), suivant la formule

$$v(t3) = vm(t3) + a(t2) * \frac{(t3\text{-}t2)}{2}\ .$$

**4.** Procédé selon la revendication 3, caractérisé en ce que la vitesse de déclenchement v(t') est calculée par extrapolation suivant la formule

$$v(t') = v(t3) + a(t2) * (t'\text{-}t3)$$

(t') désignant le moment de déclenchement enregistré par le détecteur (16), et (t3) le moment de la dernière réflexion de lumière (13) avant le moment de déclenchement (t').

**5.** Procédé selon la revendication 4, caractérisé en ce que la vitesse de déclenchement v(t') est corrigée suivant

$$deltav = \tfrac{1}{2} * e * \{\ \frac{(t3\text{-}t2)}{2} + (t'\text{-}t3)\}^2$$

avec

$$e = \frac{a(t2)\ \text{-}\ a(t1)}{\frac{(t1\text{-}t0)}{4} + \frac{(t2\text{-}t1)}{2} + \frac{(t3\text{-}t2)}{4}}$$

et (t1-t0) et (t2-t1) désignant des différences de temps précédentes.

**6.** Procédé selon la revendication 2, caractérisé en ce qu'une vitesse de rotation (rpm) en tours par minute est calculée suivant la formule

$$rpm(t2) = \frac{N}{n * T} * 60$$

N désignant le nombre de réflexions de lumière (13) pendant une durée de mesure constante T = t2-t1, et n désignant le nombre de réflecteurs (11) sur la roue d'entraînement (6).

**7.** Dispositif pour tester un limiteur de vitesse sur une installation d'ascenseur à l'aide du procédé selon la revendication 1, étant précisé que pour entraîner une poulie de renvoi de câble (8) du limiteur de vitesse qui est entraînée, lors d'un fonctionnement normal, par un câble limiteur, on prévoit un dispositif d'entraînement (1, 2, 3, 4, 5, 6) qui entraîne la poulie de renvoi de câble (8) à une vitesse (v) de plus en plus grande jusqu'au point de déclenchement du limiteur de vitesse,

caractérisé en ce qu'il est prévu un détecteur (16) qui est apte à être monté sur le limiteur de vitesse et qui détecte un moment de déclenchement (t'),

et en ce qu'il est prévu un appareil d'analyse (9) qui définit une vitesse de déclenchement v(t') du limiteur de vitesse à partir du moment de déclenchement (t') et de la vitesse (v).

8.  Dispositif selon la revendication 7, caractérisé en ce qu'il est prévu, pour entraîner la poulie de renvoi de câble (8), une roue d'entraînement (6) entraînée par une perceuse (1) et pourvue de réflecteurs (11).

9.  Dispositif selon les revendications 7 et 8, caractérisé en ce que l'appareil d'analyse (9) comporte pour définir la vitesse de déclenchement v(t') des moyens de calcul, et pour enregistrer la vitesse (v) un système optoélectronique (10) qui émet une lumière (12) et qui détecte et analyse les réflexions de lumière (13) produites à l'aide des réflecteurs (11) prévus sur la roue d'entraînement (6)

10. Dispositif selon la revendication 8, caractérisé en ce que la perceuse (1) comporte un accélérateur qui fait augmenter linéairement la vitesse de rotation de la perceuse (1).

# Fig. 1

# Fig. 2a

# Fig. 2c

# Fig. 2b

# Fig. 3

v(t')
v(t3)
vm(t3)
vm(t2)
vm(t1)

Δv
berechnete Werte
Extrapolation
gemessene Werte

v=f(t)

t0    t1    t2    t3    t'    t

# Fig. 4

N

t1    T    t2    t